# EUROPEAN PATENT APPLICATION

(11) **EP 2 923 786 A1**
(43) Date of publication of application: **30.09.2015**
(21) Application number: 12887812.1
(22) Date of filing: 30.10.2012
(51) Int. Cl.: B23B 51/04, B25J 11/00, B28D 1/14

(54) **HOLE MACHINING SYSTEM, ROBOT, HAND, AND METHOD FOR CONTROLLING HOLE MACHINING SYSTEM**

(71) Applicant: Kabushiki Kaisha Yaskawa Denki, Kitakyushu-shi, Fukuoka 806-0004 (JP)
(72) Inventor: FUJIMORI Akira, Kitakyushu-shi Fukuoka 806-0004 (JP); AKITOMI Kenji, Kitakyushu-shi Fukuoka 806-0004 (JP); YAMAMOTO Yoshiaki, Kitakyushu-shi Fukuoka 806-0004 (JP)
(74) Representative: Grünecker Patent- und Rechtsanwälte PartG mbB
(86) International application number: PCT/JP2012/078030
(87) International publication number: WO 2014/068672

(57) **Abstract**

Provided is a hole machining system 10, a robot RB, a hand 40, and a method for controlling the hole machining system 10, in which a chip CP of a workpiece W remaining inside a hole saw 50 can be removed and collected into a predetermined site.

The hole machining system 10 includes: the robot RB including the hand 40 provided with the hole saw 50 for drilling a hole in a thickness direction of the workpiece W and a push-out portion 54 for pushing outward the chip CP of the workpiece W remaining inside the hole saw 50; a contacted portion 16 disposed in such a position that the push-out portion 54 can come in contact with the contacted portion 16; and an ejecting device 20 for gripping the chip CP pushed out of the hole saw 50.

## Description

### Technical Field

The present invention relates to a hole machining system, a robot, a hand, and a method for controlling the hole machining system.

### Background Art

There is a hole saw formed by a center rotary shaft and an outer cylinder drill, which is in a circular cylindrical shape, which has a cutting blade at its tip end, and which is integrated with the center rotary shaft, as described in JP 2008-307607 A. The hole saw includes a chip push-out portion formed by an inner push-out plate housed inside the outer cylinder drill and an outer push-out plate disposed above the outer cylinder drill, the inner push-out plate and the outer push-out plate being connected by connecting rods inserted through holes in an upper lid portion of the outer cylinder drill. The chip push-out portion is biased upward by pushing springs provided between the upper lid portion of the outer cylinder drill and the outer push-out plate. The hole saw is formed so that the inner push-out plate moves downward to push out a chip downward when the outer push-out plate is pushed down.

### Citation List

### Patent Literature

Patent Literature 1: JP 2008-307607 A

### Summary of Invention

### Technical Problem

It is an object of the present invention to provide a hole machining system, a robot, a hand, and a method for controlling the hole machining system, in which a chip of a workpiece remaining inside a hole saw can be removed.

### Solution to Problem

In order to solve the problem, according to one aspect of the invention, there is provided a hole machining system including:
a robot including a hand provided with a hole saw for drilling a hole in a thickness direction of a workpiece and a push-out portion for pushing outward a chip of the workpiece remaining inside the hole saw;
a contacted portion disposed in such a position that the push-out portion can come in contact with the contacted portion; and
an ejecting device for gripping the chip pushed out of the hole saw.

According to another aspect, there is provided a robot comprising a hand, the hand including:
a hole saw for drilling a hole in a thickness direction of a workpiece;
a first member provided inside the hole saw to move forward and backward in a longitudinal direction of the hole saw;
a second member provided outside the hole saw; and
a plurality of connecting members for connecting the first member and the second member,
wherein a forward/backward movement amount of the first member is smaller than a thickness of the workpiece.

According to another aspect, there is provided a hand of a robot, the hand including:
a hole saw for drilling a hole in a thickness direction of a workpiece;
a first member provided inside the hole saw to move forward and backward in a longitudinal direction of the hole saw;
a second member provided outside the hole saw; and
a plurality of connecting members for connecting the first member and the second member,
wherein a forward/backward movement amount of the first member is smaller than a thickness of the workpiece.

According to another aspect, there is provided a method for controlling a hole machining system comprising the steps of:
drilling a hole in a workpiece by a robot, which includes a hand provided with a hole saw and a push-out portion for pushing outward a chip of the workpiece remaining inside the hole saw, by using the hole saw;
bringing the push-out portion by the robot into contact with a contacted portion disposed in a movable range of the robot to push a lower portion of the chip of the workpiece remaining inside the hole saw out of a tip end of the hole saw;
grasping the lower portion of the pushed-out chip by an ejecting device having a grasping portion for grasping the chip; and
moving the hole saw upward while rotating the hole saw by the robot to pull off the chip grasped by the ejecting device.

### Advantageous Effects of Invention

According to the present invention, it is possible to remove the chip of the workpiece remaining inside the hole saw.

### Brief Description of Drawings

Fig. 1 is a configuration diagram of a hole machining system according to an embodiment of the present invention.
Fig. 2A is a side view of a hand of a robot included in the hole machining system.
Fig. 2B is an explanatory view of the hand of the robot included in the hole machining system seen from the front.
Fig. 3A is a configuration diagram of a drilling tool provided to the hand of the robot included in the hole machining system.
Fig. 3B is an explanatory view showing an operation of a push-out portion provided to the hand of the robot included in the hole machining system.
Fig. 4A is a plan view of a tool table included in the hole machining system.
Fig. 4B is a side view (in a direction of arrow X in Fig. 4A) of the tool table included in the hole machining system.
Fig. 5A is a side view of a contacted portion and an ejecting device included in the hole machining system.
Fig. 5B is a plan view of the contacted portion and the ejecting device included in the hole machining system.
Fig. 5C is a front view of the contacted portion and the ejecting device included in the hole machining system.
Fig. 6 is an explanatory view of a sensor included in the hole machining system.
Fig. 7 is a functional block diagram of a control section included in the hole machining system.
Fig. 8 is a flowchart showing a drilling operation performed by the hole machining system.
Fig. 9 is an explanatory view of step S5 of the drilling operation performed by the hole machining system.
Fig. 10 is an explanatory view of step S6 of the drilling operation performed by the hole machining system.

### Description of Embodiment

With reference to the accompanying drawings, an embodiment embodying the present invention will be described to contribute to understanding of the invention. In the respective diagrams, portions not related to the explanation might not be shown.

A hole machining system 10 according to the embodiment of the invention can drill a hole, through which a duct for an air conditioner is passed, in a concrete wall (an example of a workpiece) W for a house produced in a factory, for example.

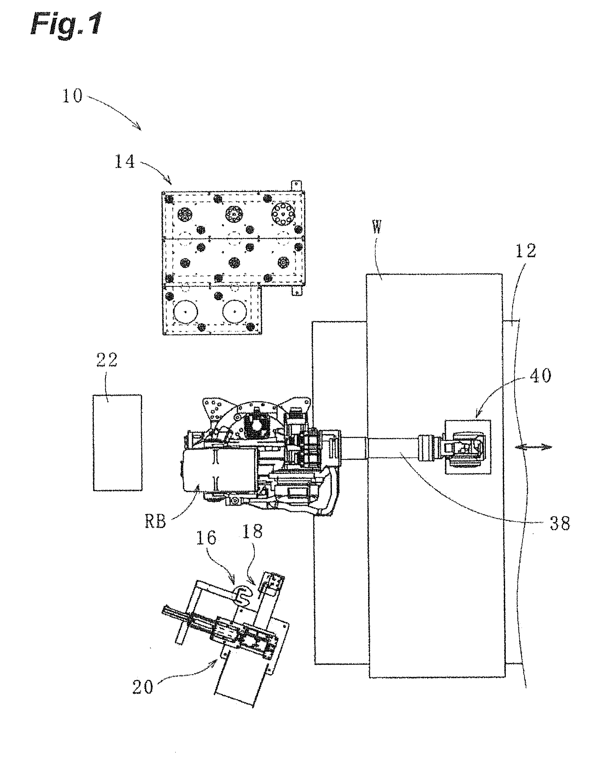

As shown in Fig. 1, the hole machining system 10 includes a conveyor table 12, a robot RB, a tool table 14, a contacted portion 16, a sensor 18, an ejecting device 20, and a control section 22.

The conveyor table 12 can convey the concrete wall W to a drilling position for the robot RB. The conveyor table 12 can convey the drilled concrete wall W from the drilling position. The concrete wall W is made of ALC (Autoclaved Lightweight Concrete) and is in a semi-hardened state.

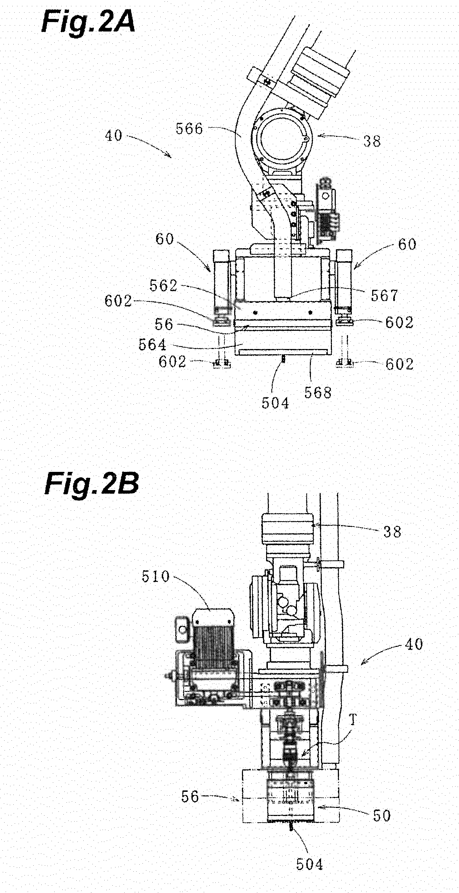

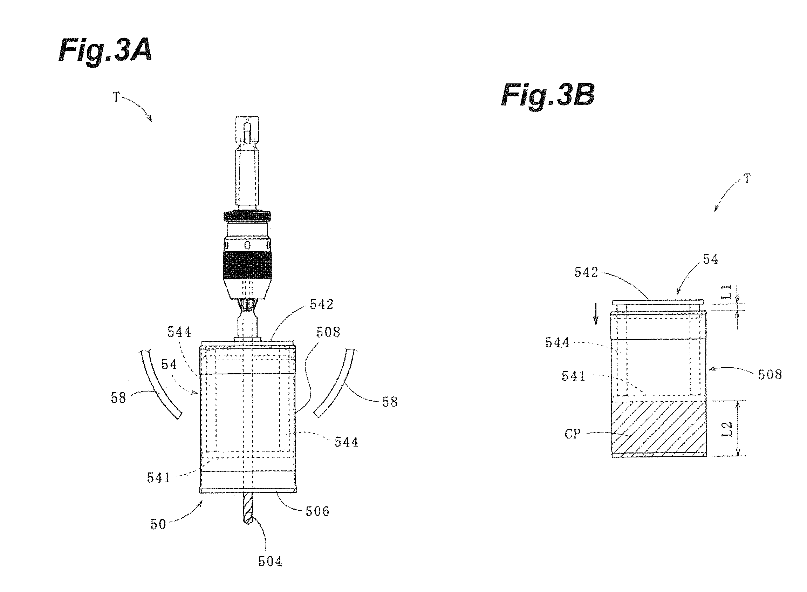

The robot RB is a six-axis vertical articulated industrial robot, for example. The robot RB has a hand 40 shown in Figs. 2A and 2B at a tip end portion of an arm 38. The hand 40 includes a hole saw 50, a push-out portion 54 (see Fig. 3A), a cover portion 56 (see Figs. 2A and 2B), blower portions 58 (see Fig. 3A), and retaining portions 60 (see Fig. 2A).

The hole saw 50 can drill a hole in the concrete wall W loaded on the conveyor table 12. The hole is drilled in a thickness direction (vertical direction) of the concrete wall W.

As shown in Fig. 3A, the hole saw 50 includes a drill 504 provided at a central portion and a cylinder portion 508 on which a blade 506 provided in an annular shape around the drill 504 in a plan view.

The hole saw 50 is driven by a motor 510 shown in Fig. 2B.

Because the concrete wall W is in the semi-hardened state as described above, a concrete chip (an example of chips) CP (see Fig. 3B) after cutting does not fall off an inner portion of the hole saw 50 but remains immediately after the drilling in many cases.

Because the hole saw 50 is provided to the hand 40 at the tip end portion of the arm 38, the hole saw 50 can take an arbitrary attitude. However, in drilling the hole in the concrete wall W, the hole saw 50 takes such an attitude that a tip end of the drill 504 is oriented downward. Therefore, the following explanation will be provided based on this attitude.

The push-out portion 54 shown in Fig. 3A can push outward a tip end portion of a concrete chip CP (see Fig. 3B) remaining inside the hole saw 50.

The push-out portion 54 has a first member 541, a second member 542, and a plurality of connecting members 544.

The first member 541 is a plate-shaped member provided inside the hole saw 50. The first member 541 can move forward and backward in a longitudinal direction of the hole saw 50. As shown in Fig. 3B, a forward/backward movement amount of the first member 541 (a forward/backward movement amount L1 of the second member 542) is smaller than a thickness L2 of the concrete chip CP.

The second member 542 is a plate-shaped member provided outside the hole saw 50. A hole is formed in a central portion of the second member 542 and the drill 504 is inserted through the hole.

The respective connecting members 544 extend in the longitudinal direction of the hole saw 50. The connecting members 544 connect the first member 541 and the second member 542. The six connecting members 544, for example, are provided at intervals.

As shown in Fig. 3B, if the concrete chip CP shown with hatch lines enters the hole saw 50, the push-out portion 54 is pushed up and the second member 542 is separated from an upper face of the hole saw 50.

The hole saw 50 and the push-out portion 54 are formed as a drilling tool T.

The cover portion 56 shown in Figs. 2A and 2B covers the hole saw 50. The cover portion 56 can suppress scattering of the swarf of the concrete wall W swirling inside in drilling of the concrete wall W.

As shown in Fig. 2A, the cover portion 56 has an upper cover 562 and a side cover 564.

The upper cover 562 is in a rectangular shape in a plan view and has a box shape which is open on a lower side. The upper cover 562 is made of metal, for example. A hole is formed in a central portion of an upper face and the drilling tool T is inserted through the hole and disposed (see Fig. 2B).

As shown in Fig. 2A, the upper cover 562 is provided with a connecting port 567 to which a hose 566 for collecting the swarf inside the cover portion 56 is connected.

The side cover 564 has a rectangular cylindrical shape which is a rectangle in a plan view, for example. The side cover 564 is made of non-rigid plastic such as vinyl, for example. The side cover 564 is preferably transparent so that a state of the hole saw 50 can be visually recognized.

An upper end portion of the side cover 564 is fixed to a side face of the upper cover 562. At a lower end portion of the side cover 564, four metal plates 568 respectively extending along edge portions are provided. The metal plates 568 serve as weights to cause the side cover 564 to hang downward to thereby keep the shape of the side cover 564. The respective metal plates 568 are in contact with an upper face of the concrete wall W to cover a periphery of the hole so as to prevent scattering of the swarf during drilling by the hole saw 50.

The blower portions 58 shown in Fig. 3A can blow air onto a tip end portion of the hole saw 50. The two blower portions 58, for example, are provided on opposite sides of the hole saw 50 from each other in a plan view. Tip ends of the blower portions 58 are disposed inside the cover portion 56.

Because the swarf of the concrete wall W produced during the drilling operation is removed by the blower portions 58, resistance to rotation of the hole saw 50 is reduced.

The paired retaining portions 60 shown in Fig. 2A are provided on opposite sides of the hole saw 50 from each other beside the cover portion 56.

Each of the retaining portions 60 has a retaining member 602 at its tip end. The retaining members 602 can move forward and backward in the longitudinal direction of the hole saw 50 to retain the upper face of the concrete wall W from above.

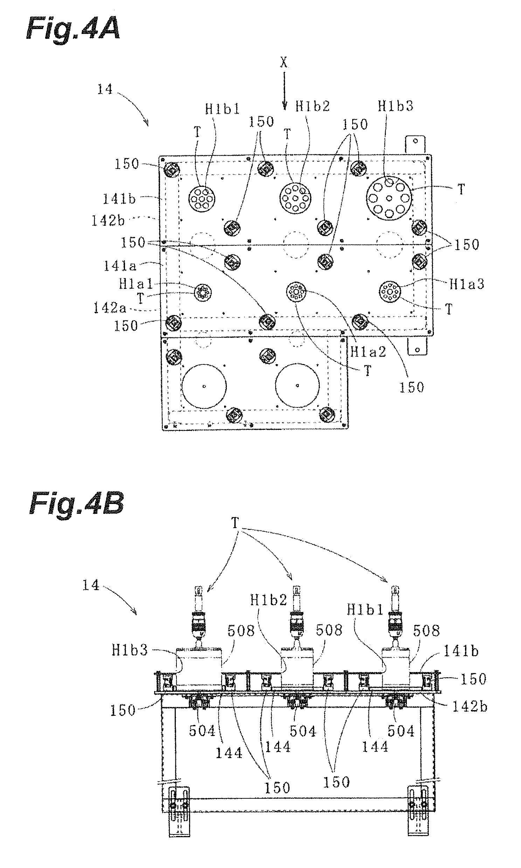

As shown in Figs. 4A and 4B, the tool table 14 can house drilling tools T of sizes corresponding to various hole diameters.

The tool table 14 has first plate-shaped members 141a and 141 b and second plate-shaped members 142a and 142b.

In the first plate-shaped member 141a, a plurality of holes H1a1 to H1a3 are formed. In the first plate-shaped member 141b, a plurality of holes H1b1 to H1b3 are formed.

The second plate-shaped members 142a and 142b are respectively disposed below the first plate-shaped members 141a and 141b at a distance from the first plate-shaped members 141a and 141b. The second plate-shaped members 142a and 142b are provided with a plurality of plate-shaped positioning members 144 respectively corresponding to the holes H1a1 to H1a3 and H1b1 to H1b3 in the first plate-shaped members 141a and 141b. In each of the positioning members 144, a circular groove in which the cylinder portion 508 of the hole saw 50 is housed is formed. In a central portion of the groove, a hole through which a tip end portion of the drill 504 is inserted and housed is formed.

Positions of the drilling tools T of the plurality of sizes are roughly determined by the holes H1a1 to H1a3 and H1b1 to H1b3 and the drilling tools T are positioned in the predetermined positions by the positioning members 144.

Paired transmission optical sensors 150 are provided at a periphery of each of the positioning members 144 to detect presence or absence of the drilling tool T. The first plate-shaped members 141a and 141b serve also as protecting covers for protecting the optical sensors 150 from the swarf.

The first plate-shaped members 141 a and 141b may be formed by a single plate material. The second plate-shaped members 142a and 142b may be formed by a single plate material.

As shown in Fig. 1, the contacted portion 16 is disposed in a movable range of the arm 38 of the robot RB and at a position closer to the robot RB than the ejecting device 20.

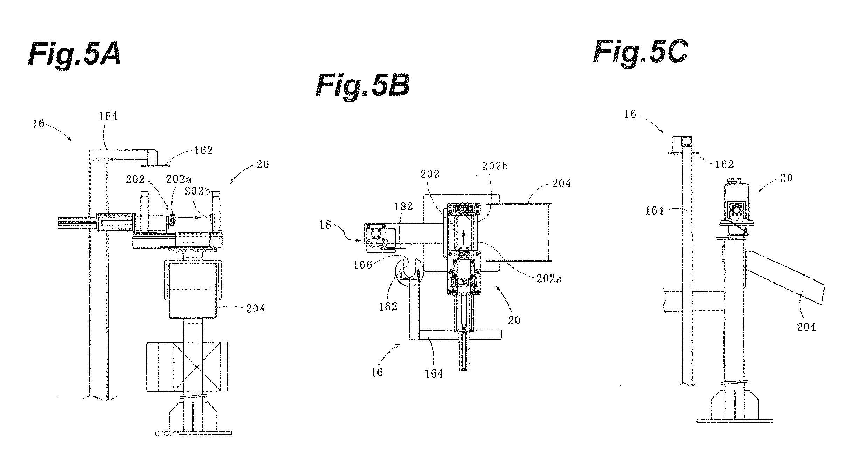

As shown in Figs. 5A to 5C, the contacted portion 16 has a contacted member 162 provided to its tip end portion and a support member 164 for supporting the contacted member 162.

The contacted member 162 is a circular plate material having one face oriented downward. As shown in Fig. 5B, a notch 166 extending from a central portion to an outer periphery is formed in the contacted member 162.

The support member 164 can support an upper face of the contacted member 162.

The robot RB can push the concrete chip CP out of the hole saw 50 by bringing the second member 542 (see Fig. 3B) of the push-out portion 54 into contact with the contacted member 162.

The sensor 18 shown in Figs. 1 and 5B is a contact sensor for checking that the concrete chip CP is remaining inside the hole saw 50. The sensor 18 is provided in the movable range of the arm 38 of the robot RB and near the contacted portion 16.

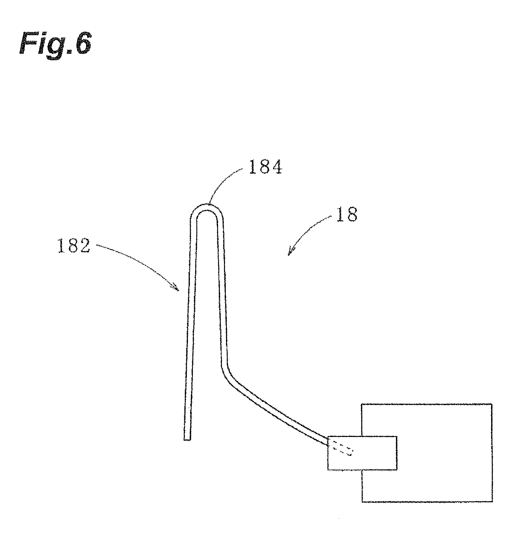

As shown in Fig. 6, the sensor 18 has a stick-shaped contact 182. A portion of the stick-shaped contact 182 is bent to form a top portion 184 to be inserted into the hole saw 50.

When the robot RB moves the hand 40 to insert the top portion 184 into the hole saw 50 and if contact by the contact 182 is detected, the concrete chip CP is determined to be remaining inside the hole saw 50 without having fallen off.

The ejecting device 20 shown in Figs. 5A to 5C can take the concrete chip CP out of the hole saw 50 and eject it into a predetermined collection site.

The ejecting device 20 has a grasping portion 202 and a guide portion 204.

The grasping portion 202 has a movable claw 202a for moving forward and backward in one direction and a fixed claw 202b pairing up with the movable claw 202a and fixed in a position facing the movable claw 202a. By using the movable claw 202a and the fixed claw 202b, the grasping portion 202 can grasp a side face of a lower portion of the concrete chip CP pushed out of the hole saw 50 by the push-out portion 54 which has come in contact with the contacted portion 16.

The guide portion 204 can guide the concrete chip CP released from the grasping portion 202 into the collection site (not shown). The collection site is provided in a direction intersecting the direction of forward and backward movements of the movable claw 202a, for example, in a plan view.

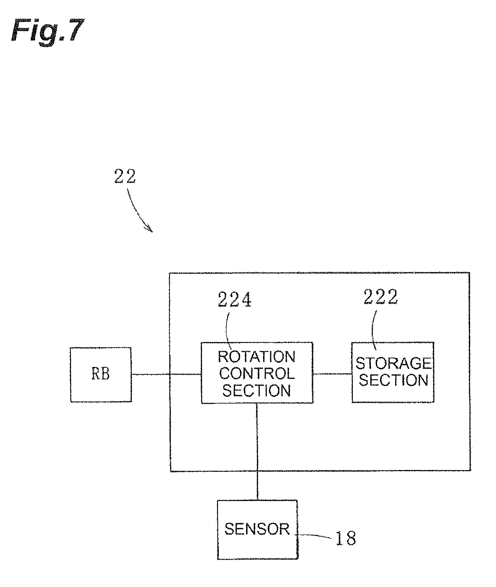

To the control section 22, the robot RB and the sensor 18 are connected as shown in Fig. 7. The control section 22 can control the robot RB (including the motor 510 for driving the hole saw 50 and shown in Fig. 2B). The control section 22 is a robot controller, for example.

The control section 22 includes a storage section 222 and a rotation control section 224.

The storage section 222 can store an initial rotation speed set value, a first intermediate rotation speed set value, a second intermediate rotation speed set value, and a final rotation speed set value.

The initial rotation speed set value is a set value for determining a rotation speed when the blade 506 of the cylinder portion 508 of the hole saw 50 comes in contact with the upper face of the concrete wall W.

The first intermediate rotation speed set value is a set value for determining a rotation speed when the blade 506 of the cylinder portion 508 of the hole saw 50 is advanced to a central portion of the concrete wall W in the thickness direction after the blade 506 comes in contact with the upper face of the concrete wall W.

The second intermediate rotation speed set value is a set value for determining a rotation speed when the blade 506 is advanced downward from the central portion of the concrete wall W in the thickness direction.

The final rotation speed set value is a set value for determining a rotation speed when the blade 506 of the cylinder portion 508 of the hole saw 50 sticks out of a lower face of the concrete wall W. A decorative pattern (embossed pattern) is formed on the lower face of the concrete wall W as an exterior wall for a house and the embossed pattern becomes resistance to the rotation of the hole saw 50. Therefore, in order to reduce the resistance, the final rotation speed set value is set.

The rotation control section 224 can control the rotation of the hole saw 50 based on the respective set values stored in the storage section 222.

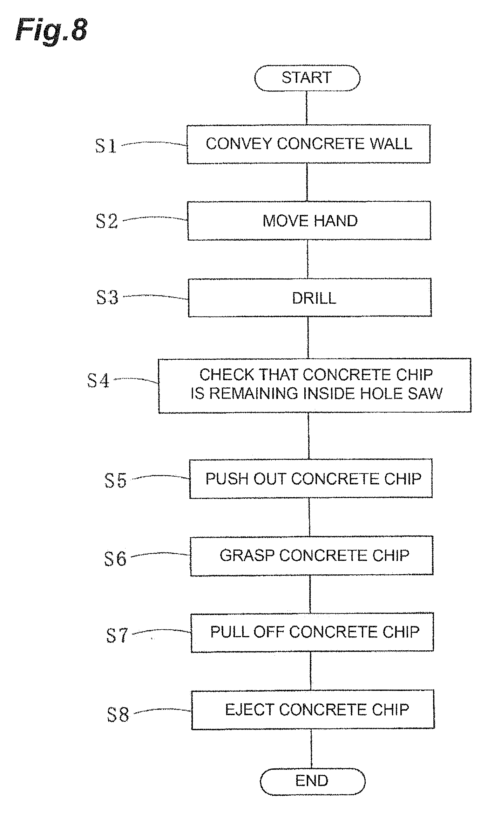

Next, the drilling operation of the hole machining system 10 for drilling the concrete wall W will be described based on Fig. 8.

### (Step S1)

The concrete wall W is conveyed to the conveyor table 12 shown in Fig. 1. The conveyed concrete wall W is positioned in a predetermined position.

### (Step S2)

The robot RB moves the hand 40 to move the hole saw 50 shown in Fig. 2B to the drilling position of the concrete wall W. The hole saw 50 approaches the upper face of the concrete wall W while rotating.

The respective metal plates 568 provided to the cover portion 56 (see Fig. 2A) of the hand 40 come in contact with the upper face of the concrete wall W.

The retaining members 602 of the respective retaining portions 60 advance to come in contact with the upper face of the concrete wall W. Because the retaining members 602 of the respective retaining portions 60 retain the upper face of the concrete wall W, runout of the hole saw 50 is suppressed.

### (Step S3)

The hole saw 50 starts drilling. The rotation speed of the hole saw 50 is controlled according to the initial rotation speed set value, the first intermediate rotation speed set value, the second intermediate rotation speed set value, and the final rotation speed set value.

As the blade 506 of the cylinder portion 508 advances, the concrete chip CP pushes up the first member 541 of the push-out portion 54 and the second member 542 is separated from the upper face of the hole saw 50.

Preferably, the robot RB pulls the hole saw 50 out of the concrete wall W in the process of drilling to suppress clogging with the swarf.

Because the side cover 564 is bent as the blade 506 advances, the respective metal plates 568 are kept in contact with the upper face of the concrete wall W to suppress scattering of the swarf of the concrete wall W swirling inside the cover portion 56 to the outside.

### (Step S4)

After the hole is opened through, the robot RB pulls the hole saw 50 out of the concrete wall W. The retaining members 602 of the respective retaining portions 60 recede.

The drilled concrete wall W is conveyed from the conveyor table 12.

The robot RB moves the hand 40 and inserts the top portion 184 of the contact 182 of the sensor 18 shown in Fig. 6 into the hole saw 50.

If the sensor 18 reacts before coming in contact with the first member 541 provided inside the hole saw 50, the control section 22 determines that the contact 182 has come in contact with a lower face of the concrete chip CP. In other words, the control section 22 determines that the concrete chip CP is remaining inside the hole saw 50 without having fallen off.

On the other hand, if the sensor 18 comes in contact with the first member 541 provided inside the hole saw 50 and reacts, the control section 22 determines that the concrete chip CP has fallen off and performs predetermined processing such as alarm processing, for example.

### (Step S5)

If the concrete chip CP is determined to be remaining inside the hole saw 50, the robot RB moves the hand 40 and brings the second member 542 of the push-out portion 54 into contact with the contacted portion 16 to push the lower portion of the concrete chip CP out of the tip end of the hole saw 50.

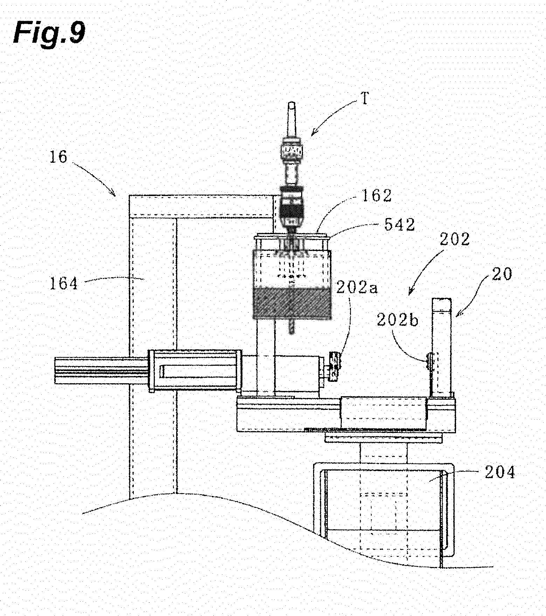

Specifically, as shown in Fig. 9, the robot RB inserts a shaft portion of the drill 504 above the second member 542 through the notch 166 (see Fig. 5B) formed in the contacted member 162. Then, the robot RB pushes an upper face of the second member 542 of the push-out portion 54 against a lower face of the contacted member 162 of the hole saw 50 and advances the first member 541 toward the tip end of the hole saw 50. As a result, the lower portion of the concrete chip CP is pushed out of the tip end of the hole saw 50.

### (Step S6)

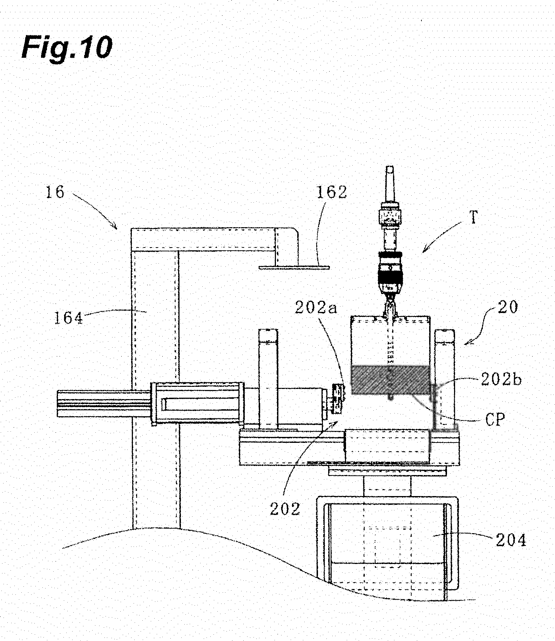

As shown in Fig. 10, the robot RB moves the hand 40 and brings the side face of the lower portion of the concrete chip CP into contact with the fixed claw 202b of the ejecting device 20. The movable claw 202a advances toward the fixed claw 202b and the grasping portion 202 of the ejecting device 20 grasps the lower portion of the concrete chip CP pushed out of the tip end of the hole saw 50.

### (Step S7)

The robot RB moves the hole saw 50 upward while rotating the hole saw 50 in the same direction as that in the drilling to pull the concrete chip CP off the hole saw 50. If the hole saw 50 moves upward while rotating, the concrete chip CP in the semi-hardened state is easily pulled off.

The pulled-off concrete chip CP is held by the movable claw 202a and the fixed claw 202b of the grasping portion 202 of the ejecting device 20.

### (Step S8)

If the ejecting device 20 moves the movable claw 202a backward to open the grasping portion 202, the concrete chip CP falls off. The concrete chip CP which has fallen off is guided by the guide portion 204 and collected into the collection site.

After that, steps S1 to S8 are repeated and the concrete walls W conveyed successively are drilled. The robot RB can replace the drilling tool T housed in the tool table 14 as necessary to drill a hole of a predetermined diameter in the concrete wall W.

As described above, the hole machining system 10 can remove the concrete chip CP remaining inside the hole saw 50 and collect it into the predetermined site. Especially, because the forward/backward movement amount L1 of the push-out portion 54 shown in Fig. 3B is smaller than the thickness L2 of the concrete chip CP, it is possible to employ an ordinary hole saw to form the hand 40.

The invention is not limited to the above-described embodiment and can be changed without departing from the gist of the invention. For example, combinations of parts or all of the above-described embodiment and variations to form the invention are included in a technical scope of the invention.

The robot is not limited to the vertical articulated industrial robot.

### Reference Signs List

- 10:: hole machining system
- 12:: conveyor table
- 14:: tool table
- 16:: contacted portion
- 18:: sensor
- 20:: ejecting device
- 22:: control section
- 38:: arm
- 40:: hand
- 50:: hole saw
- 54:: push-out portion
- 56:: cover portion
- 58:: blower portion
- 60:: retaining portion
- 141a, 141b:: first plate-shaped member
- 142a, 142b:: second plate-shaped member
- 144:: positioning member
- 150:: optical sensor
- 162:: contacted member
- 164:: support member
- 166:: notch
- 182:: contact
- 184:: top portion
- 202:: grasping portion
- 202a:: movable claw
- 202b:: fixed claw
- 204:: guide portion
- 222:: storage section
- 224:: rotation control section
- 504:: drill
- 506:: blade
- 508:: cylinder portion
- 510:: motor
- 541:: first member
- 542:: second member
- 544:: connecting member
- 562:: upper cover
- 564:: side cover
- 566:: hose
- 567:: connecting port
- 568:: metal plate
- 602:: retaining member
- CP:: concrete chip
- H1a1 to H1a3:: hole
- H1b1 to Hlb3:: hole
- RB:: robot
- T:: drilling tool
- W:: concrete wall

## Claims

1. A hole machining system comprising:
a robot including a hand provided with a hole saw for drilling a hole in a thickness direction of a workpiece and a push-out portion for pushing outward a chip of the workpiece remaining inside the hole saw;
a contacted portion disposed in such a position that the push-out portion can come in contact with the contacted portion; and
an ejecting device for gripping the chip pushed out of the hole saw.

2. A hole machining system according to claim 1,
wherein the push-out portion includes a first member provided inside the hole saw to move forward and backward in a longitudinal direction of the hole saw,
a second member provided outside the hole saw, and
a plurality of connecting members for connecting the first member and the second member.

3. A hole machining system according to claim 1 or 2,
wherein a forward/backward movement amount of the first member is smaller than a thickness of the chip.

4. A hole machining system according to claim 3,
wherein the hand further includes a blower portion for blowing air onto a tip end portion of the hole saw.

5. A hole machining system according to claim 4,
wherein the hand further includes a cover portion for covering the hole saw and provided with a connecting port to which a hose for collecting swarf of the workpiece swirling inside is connected.

6. A hole machining system according to claim 5,
wherein the hand further includes a retaining portion for retaining the workpiece from above.

7. A hole machining system according to claim 6 further comprising
a contact sensor for checking that the chip is remaining inside the hole saw,
wherein the contact sensor has a stick-shaped contact, a portion of the contact being bent to form a top portion to be inserted into the hole saw.

8. A hole machining system according to claim 7,
wherein the ejecting device includes a grasping portion for grasping a lower portion of the chip pushed out by the push-out portion and
a guide portion for guiding the chip having fallen off the grasping portion into a predetermined collection site.

9. A hole machining system according to claim 8 further comprising a control section including
a storage section for storing an initial rotation speed set value for determining a rotation speed when the hole saw comes in contact with an upper face of the workpiece and a final rotation speed set value for determining a rotation speed when the hole saw sticks out of a lower face of the workpiece and
a rotation control section for controlling rotation of the hole saw based on the initial rotation speed set value and the final rotation speed set value,
the control section controlling the robot.

10. A hole machining system according to claim 9 further comprising a tool table including
a first plate-shaped member in which a plurality of holes are formed and
a second plate-shaped member disposed below the first plate member at a distance from the first plate member and provided with positioning members corresponding to the plurality of holes and positioning the hole saws of a plurality of sizes.

11. A robot comprising a hand, the hand including:
a hole saw for drilling a hole in a thickness direction of a workpiece;
a first member provided inside the hole saw to move forward and backward in a longitudinal direction of the hole saw;
a second member provided outside the hole saw; and
a plurality of connecting members for connecting the first member and the second member,
wherein a forward/backward movement amount of the first member is smaller than a thickness of the workpiece.

12. A hand of a robot, the hand comprising:
a hole saw for drilling a hole in a thickness direction of a workpiece;
a first member provided inside the hole saw to move forward and backward in a longitudinal direction of the hole saw;
a second member provided outside the hole saw; and
a plurality of connecting members for connecting the first member and the second member,
wherein a forward/backward movement amount of the first member is smaller than a thickness of the workpiece.

13. A method for controlling a hole machining system comprising the steps of:
drilling a hole in a workpiece by a robot, which includes a hand provided with a hole saw and a push-out portion for pushing outward a chip of the workpiece remaining inside the hole saw, by using the hole saw;
bringing the push-out portion by the robot into contact with a contacted portion disposed in a movable range of the robot to push a lower portion of the chip of the workpiece remaining inside the hole saw out of a tip end of the hole saw;
grasping the lower portion of the pushed-out chip by an ejecting device having a grasping portion for grasping the chip; and
moving the hole saw upward while rotating the hole saw by the robot to pull off the chip grasped by the ejecting device.
